Europäisches Patentamt

European Patent Office

Office européen des brevets

(11) Veröffentlichungsnummer: **0 355 270 B1**

(12) **EUROPÄISCHE PATENTSCHRIFT**

(45) Veröffentlichungstag der Patentschrift:
17.07.91 Patentblatt 91/29

(51) Int. Cl.⁵: **F16L 5/02, H02G 3/22**

(21) Anmeldenummer: **89108569.8**

(22) Anmeldetag: **12.05.89**

(54) **Dichtung für eine Durchführung für Leitungen, wie Kabel, Rohre oder dergl., durch eine Wandöffnung.**

(30) Priorität: **24.08.88 DE 3828693**

(43) Veröffentlichungstag der Anmeldung:
**28.02.90 Patentblatt 90/09**

(45) Bekanntmachung des Hinweises auf die Patenterteilung:
**17.07.91 Patentblatt 91/29**

(84) Benannte Vertragsstaaten:
**AT BE CH DE ES FR GB IT LI NL SE**

(56) Entgegenhaltungen:
**DD-A- 233 621**
**DE-A- 3 102 710**
**DE-A- 3 322 809**
**DE-A- 3 442 074**
**GB-A- 1 361 801**

(73) Patentinhaber: **PLASTOFORM GMBH & CO. KG**
**Burgstrasse 25**
**W-4973 Vlotho (DE)**

(72) Erfinder: **Hauff, Werner**
**Herlsbühlstrasse 19**
**W-7925 Dischingen-Ballmertshofen (DE)**

(74) Vertreter: **Fay, Hermann, Dipl.-Phys. Dr. et al**
**Dipl.-Phys. Hermann Fay und Dr. Joachim Dziewior Ensingerstrasse 21 Postfach 17 67**
**W-7900 Ulm/Donau (DE)**

## Beschreibung

Die Erfindung betrifft eine Dichtung für eine Durchführung für Leitungen, wie Kabel, Rohre oder dergl., durch eine Wandöffnung, bestehend aus einem Aufnahmen für die Leitungen aufweisenden, einerseits gegen die Laibung der Wandöffnung, andererseits gegen die Leitungen abdichtenden gummielastischen Dichtkörper und Flanschplatten, die auf beiden Stirnseiten des Dichtkörpers angeordnet und über den dazwischen liegenden Dichtkörper gegeneinander verspannbar sind, wobei der Dichtkörper durch in den Aufnahmen mündende Trennfugen geteilt ist, die Flanschplatten den Dichtkörper auf beiden Stirnseiten im wesentlichen über dessen gesamte Stirnfläche bedecken und den Aufnahmen entsprechende Öffnungen für die Leitungen und in den Öffnungen mündende und die Flanschplatten teilende Trennfugen aufweisen, die an beiden Flanschplatten in der axialen Projektion übereinstimmend verlaufen, und wobei an jedem Flanschplattenteil mindestens eine Trennfuge an von Trennfugen freier Stelle des Dichtkörpers zwischen einer der Öffnungen und dem Flanschplattenrand verläuft.

Dichtungen dieser Art sind aus der DE-A-31 02 710 bekannt und ermöglichen den nachträglichen Einbau bei bereits verlegten Leitungen und schon liegendem Futterrohr. Die Flanschplatten sind jeweils durch zwei halbringförmige Flanschplattenteile gebildet, die dem einstückig ausgebildeten und mit einem radial laufenden Schlitz versehenen Dichtkörper an den Stirnseiten im montierten Zustand anliegen. Die Flanschplatten sind über den Dichtkörper durch Spannbolzen, die in Richtung der Leitung verlaufen, verspannt und bewirken eine axiale Komprimierung des Dichtkörpers, so daß er sich radial dichtend gegen das Futterrohr und die Leitungen anlegt.

Nachteilig ist hierbei, daß zur Montage die Dichtung zunächst in ihre Einzelteile zerlegt werden muß und die Einzelteile nur nacheinander montiert werden können, wobei der Dichtkörper von der Seite her über die Leitung gestülpt, die Flanschplattenteile zu zwei die Leitung umschließenden Ringen an die Stirnseiten des Dichtkörpers angefügt und die Spannbolzen in die für sie vorgesehenen Bohrungen in den Flanschplatten und im Dichtkörper eingesetzt werden müssen, was alles zeitaufwendig ist und Sorgfalt erfordert.

Eine weitere Dichtung dieser Art ist aus der GB-A-1 361 801 bekannt. Der Dichtkörper und die Flanschplatten bestehen jeweils aus mindestens zwei Teilen. Die Flanschplattenteile sind den Dichtkörperteilen an den Stirnseiten so aufgesetzt, daß Freiräume zwischen den Flanschplattenteilen entstehen. Im Bereich dieser Freiräume sind die jeweils benachbarten zwei Dichtkörperteile durch einen axial ausgerichteten Stift gelenkig miteinander verbunden. Die so verbundenen Dichtkörperteile bilden in ihrer Gesamtheit einen ringförmigen Dichtkörper, der zur Montage der Dichtung durch Herausnahme eines der Stifte geöffnet werden kann. Wiederum wird die Abdichtung durch axiale Kompression des Dichtkörpers erzielt, die über Spannschrauben, die in axialer Richtung die Flanschplattenteile und die Dichtkörperteile durchdringen, eingestellt werden kann. Nachteilig ist hier, daß zur Montage der Dichtung mindestens eine der Gelenkverbindungen geöffnet und wieder hergestellt werden muß, was aufwendig und umständlich ist.

Der Erfindung liegt die Aufgabe zugrunde, eine Dichtung der eingangs genannten Art so auszubilden, daß sie bei schon liegenden Leitungen ohne vorherige Zerlegung in Einzelteile montiert werden kann.

Diese Aufgabe wird nach der Erfindung dadurch gelöst, daß die am Flanschplattenteil an von Trennfugen freier Stelle des Dichtkörpers verlaufende Trennfuge von kongurenten koaxialen Rotationsflächen an den über die Trennfuge einander benachbarten Flanschplattenteilen gebildet ist, und daß von dieser Öffnung eine andere Trennfuge der Flanschplatten direkt oder über weitere Öffnungen zum Flanschplattenrand verläuft und zu dieser Trennfuge eine entsprechend verlaufende Trennfuge im Dichtkörper vorgesehen ist.

An den durch die Rotationsflächen gebildeten Trennfugen sind die Teile der Flanschplatten durch den Dichtkörper zusammengehalten, da diesen Trennfugen keine Trennfugen im Dichtkörper entsprechen. Die Rotationsflächen bilden daher Gelenke, in welchen die aneinandergrenzenden Teile der Flanschplatten unter minimaler elastischer Verformung des Dichtkörpers so aufgebogen werden können, daß sich die Öffnungen der Flanschplatten und mit ihnen die Aufnahmen im Dichtkörper seitlich öffnen, so daß die Dichtung als Ganzes aufgebogen, den Leitungen von der Seite her angelegt und anschließend über die Leitungen geschlossen werden kann, ohne daß sie zuvor in lose Einzelteile zerlegt werden müßte. Die so über die Leitungen gelegte und geschlossene Dichtung wird anschließend auf den Leitungen in das Futterrohr oder die Kernbohrung geschoben und darin dadurch verspannt, daß die beiden Flanschplatten über den Dichtkörper gegeneinander verspannt werden.

Eine bevorzugte Ausführungsform ist dadurch gekennzeichnet, daß die Trennfugen im Dichtkörper gegen dessen Stirnflächen geneigte Trennflächen aufweisen und an den Stirnflächen des Dichtkörpers auf entgegengesetzten Seiten der zugehörigen Trennfugen der Flanschplatten münden. Dank der Neigung der Trennflächen werden diese beim Verspannen der Spannflansche auch unmittelbar in Richtung der Spannkraft zusammengedrückt. Ebenfalls für eine bessere Abdichtung des Dichtkörpers in den Trennfugen empfiehlt es sich, daß in den Trennfugen des Dichtkörpers die Trennflächen längs der Trennfugen verlaufende Nut- und Federausbildungen aufweisen, die vorzugsweise formschlüssig ineinander greifen und Überlappungen der Trennflächen quer zum Leitungsverlauf bilden.

Eine weiter bevorzugte Ausführungsform der Erfindung ist dadurch gekennzeichnet, daß der Dichtkörper an den Aufnahmen mit je einem Kragen in die Öffnungen der Flanschplatten vorsteht und die Kragen bündig mit der Außenseite der Flanschplatten abschließen. Der Kragen isoliert die Leitungen von den Flanschplatten.

Zum Verspannen der Flanschplatten über den Dichtkörper empfiehlt sich eine Anordnung, die dadurch gekennzeichnet ist, daß der Dichtkörper und die Flanschplatten zwischen den Aufnahmen bzw. Öffnungen sich deckende Löcher aufweisen, durch die außen auf den Flanschplatten abgestützte Spannbolzen greifen. Zweckmäßig sind die Spannbolzen Spannschrauben mit als Hutmuttern ausgebildeten Spannmuttern. Die Hutmuttern haben den Vorteil, daß sie den Spannweg begrenzen und ein zu starkes Verpressen des Dichtkörpers ausschließen.

Im folgenden wird die Erfindung an in der Zeichnung dargestellten Ausführungsbeispielen näher erläutert; es zeigen :

Fig. 1     eine Dichtung nach der Erfindung in Ansicht bei geschlossenem Zustand,
Fig. 2     die Dichtung nach Fig. 1 in geöffnetem Zustand,
Fig. 3     den Schnitt III-III in Fig. 1,
Fig. 4     die Ansicht der Dichtung nach Fig. 1 in Richtung des Pfeiles IV,
Fig. 5     eine Ansicht nur des Dichtkörpers der Dichtung nach Fig. 1,
Fig. 6     eine andere Dichtung nach der Erfindung in einer Schrägansicht,
Fig. 7     die Dichtung nach Fig. 6 im Schnitt,
Fig. 8     eine Ansicht nur des Dichtkörpers der Dichtung nach den Fig. 6 und 7, und
Fig. 9     in den Teilfiguren 9a bis 9d verschiedene Trennfugenausbildungen im Dichtkörper jeweils in Seitenansicht.

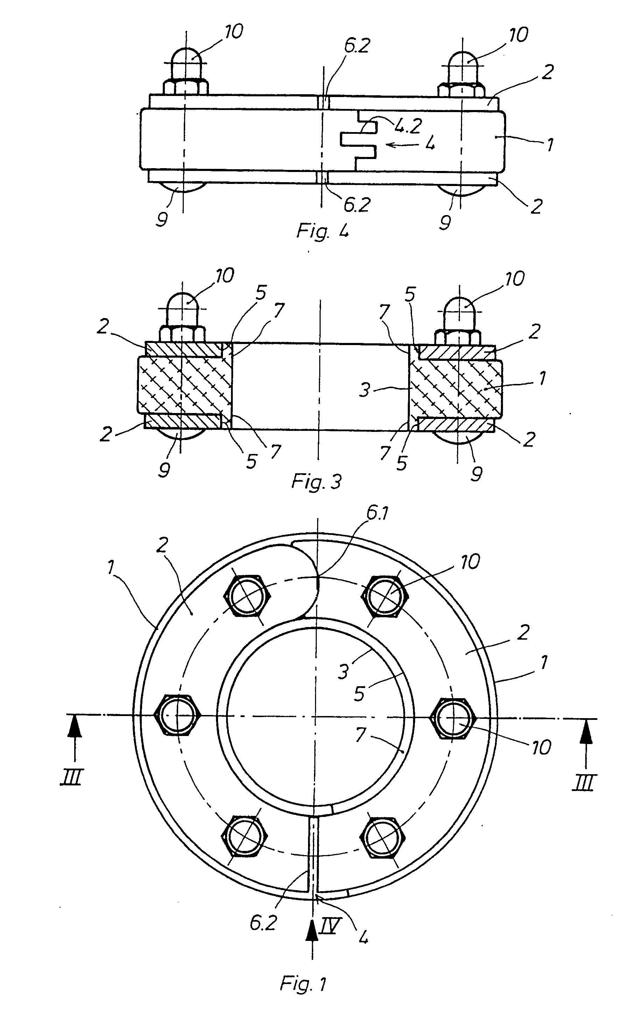

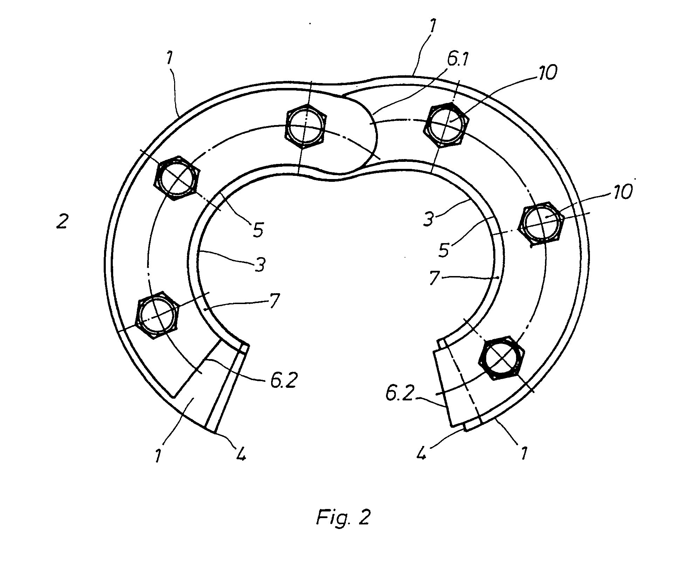

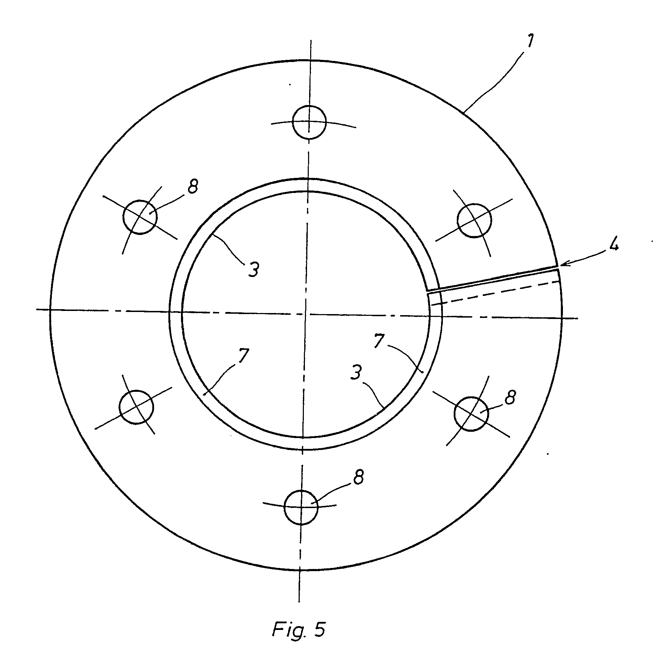

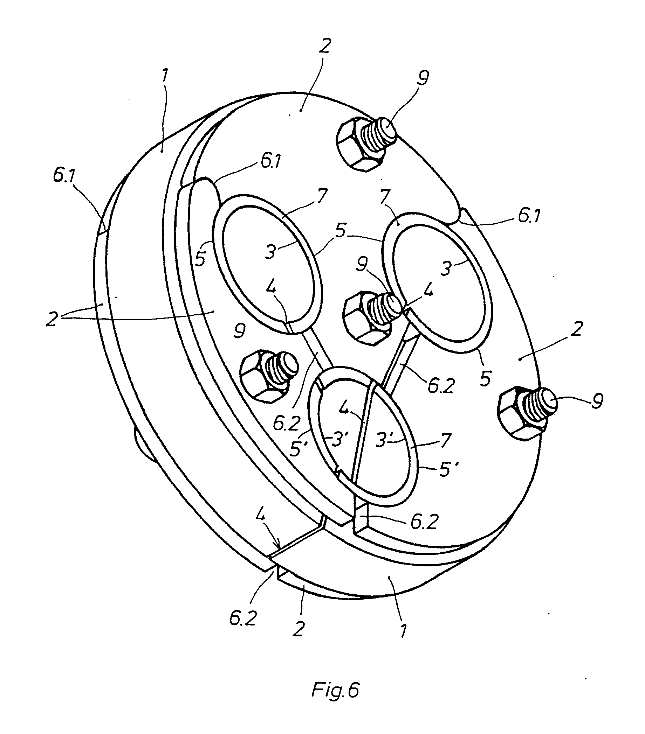

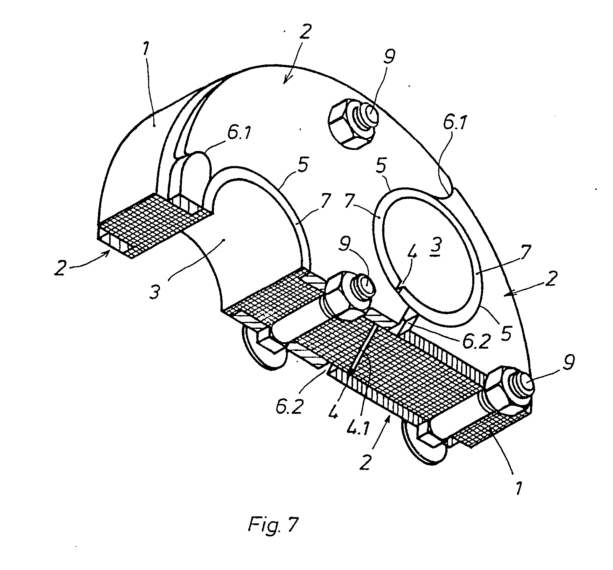

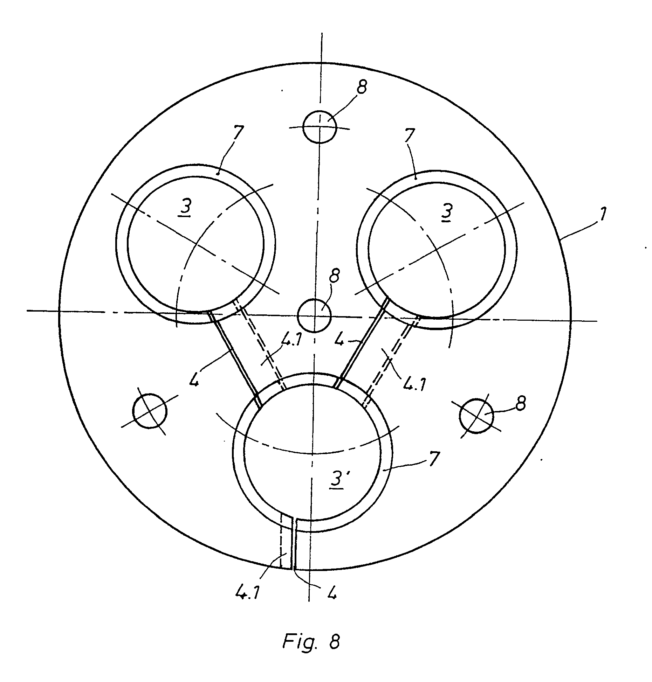

In der Zeichnung ist der Dichtkörper mit 1, die Flanschplatten sind mit 2 bezeichnet. Der Dichtkörper 1 besteht aus gummielastischem Werkstoff und besitzt Aufnahmen 3 für die nicht dargestellten Leitungen. Er ist durch in den Aufnahmen 3, 3' mündende Trennfugen 4 geteilt. Die Flanschplatten 2 sind auf beiden Stirnseiten des Dichtkörpers 1 angeordnet und über den dazwischen liegenden Dichtkörper 1 gegeneinander verspannbar, wodurch der Dichtkörper 1 einerseits gegen die Laibung der Wandöffnung, andererseits gegen die in den Aufnahmen 3 liegenden Leitungen abdichtet. Die Flanschplatten 2 bedecken den Dichtkörper 1 auf beiden Stirnseiten im wesentlichen über dessen gesamte Stirnflächen. Sie besitzen den Aufnahmen 3 des Dichtkörpers 1 entsprechende Öffnungen 5, 5' für die Leitungen und in den Öffnungen 5, 5' mündende eigene Trennfugen 6.1, 6.2, die an beiden Flanschplatten 2 in der axialen, d.h. in Richtung des Leitungsverlaufes gesehenen Projektion übereinstimmend verlaufen. An jedem Flanschplattenteil verläuft mindestens eine Trennfuge 6.1 an von Trennfugen 4 freier Stelle des Dichtkörpers 1 zwischen einer der Öffnungen 5 und dem Flanschplattenrand. Diese Trennfugen 6.1, denen also keine Trennfuge 4 im Dichtkörper 1 entspricht, sind von kongruenten koaxialen Rotationsflächen an den über die Trennfuge 6.1 einander benachbarten Flanschplattenteilen gebildet. An diesen Trennfugen 6.1 sind daher die Flanschplattenteile durch den gummielastischen Dichtkörper 1 zusammengehalten. Die koaxialen Rotationsflächen bilden folglich Gelenke, in welchen die aneinander grenzenden Flanschplattenteile unter entsprechender elastischer Verformung des Dichtkörpers 1 aufgebogen werden können, wie dies Fig. 2 zeigt. Dadurch werden die Öffnungen 5, 5' in den Flanschplatten 2 und die Aufnahmen 3 3' im Dichtkörper 1 seitlich geöffnet, so daß die aufgebogene Dichtung von der Seite her über die Leitungen geschoben und anschließend über die in den Aufnahmen 3, 3' liegenden Leitungen geschlossen werden kann, ohne vorher zerlegt worden zu sein. Für dieses Öffnen ist wesentlich, daß von den Öffnungen 5 in der Flanschplatte 2 je eine andere Trennfuge 6.2 zum Flanschplattenrand verläuft und daß zu dieser Trennfuge 6.2 eine entsprechend verlaufende Trennfuge 4 im Dichtkörper 1 vorgesehen ist. Im Ausführungsbeispiel nach den Fig. 1 bis 5 ist nur eine einzige Aufnahme 3 bzw. Öffnung 5 vorgesehen, so daß die übereinstimmenden Trennfugen 6.2, 4 der Flanschplatten 2 und des Dichtkörpers 1 von der Öffnung 5 bzw. Aufnahme 3 direkt zum Flanschplattenrand verlaufen. Im Ausführungsbeispiel nach den Fig. 6 bis 8 dagegen sind drei Aufnahmen 3, 3 bzw. Öffnungen 5, 5' vorgesehen. Hier verläuft von beiden Öffnungen 5, von welchen die durch koaxiale Rotationsflächen gebildeten Trennfugen 6.1 zum Flanschplattenrand verlaufen, je eine zweite Trennfuge 6.1 über die weitere Öffnung 5' bzw. Aufnahme 3' zum Flanschplattenrand. Von den Öffnungen 5 kann die Trennfuge 6.2, der eine entsprechende Trennfuge 4 im Dichtkörper 1 zugeordnet ist, also direkt wie in den Fig. 1 bis 4 oder indirekt über eine oder mehrere weitere Öffnungen 5' wie in den Fig. 6 bis 8 zum Flanschplattenrand verlaufen. In jedem dieser Fälle sorgt die Übereinstimmung der Trennfugen 6.2 in den Flanschplatten 2 mit entsprechenden Trennfugen 4 im Dichtkörper 1 für die Möglichkeit des Öffnens der Dichtung.

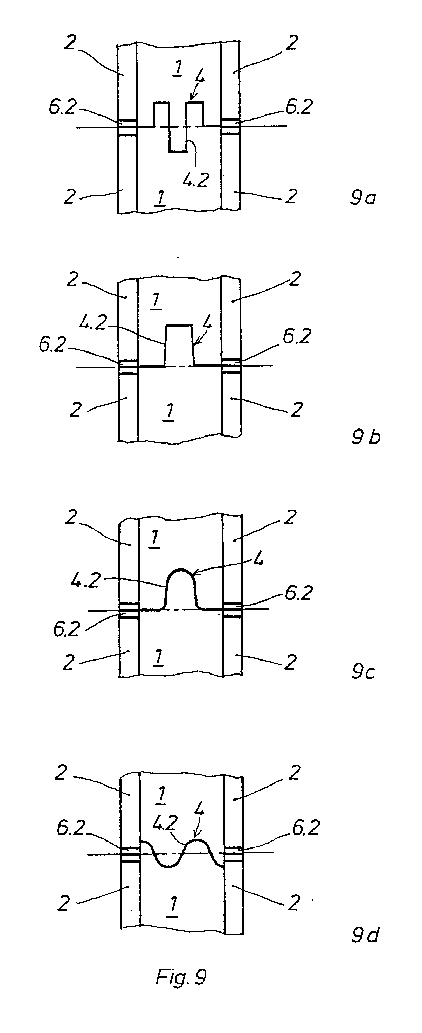

Die Trennfugen 4 im Dichtkörper 1 können gegen dessen Stirnflächen geneigte Trennflächen 4.1 besitzen, wie dies in den Fig. 6 bis 8 für die Trennfugen 4 gilt. In den Trennfugen 4 des Dichtkörpers 1 können aber die Trennflächen auch längs der Trennfugen verlaufende Nut- und Federausbildungen 4.2 aufweisen, die ineinandergreifen und Überlappungen der Trennflächen quer zum Leitungsverlauf bilden, wie dies in den Fig. 1 bis 5 und in den Fig. 6 bis 8 für die Trennfuge 4.1', der Fall ist. Die Nut- und Federausbildungen können im Profil unterschiedlich gestaltet sein. Verschiedene Ausführungsbeispiele zeigt die Fig. 9 in den Teilfiguren 9a bis 9d.

Der Dichtkörper 1 steht an den Aufnahmen 3, 3' mit je einem Kragen 7 in die Öffnungen 6.1, 6.2 der Flanschplatten 2 vor. In den Ausführungsbeispielen ist dabei die Anordnung so getroffen, daß die Kragen 7 bündig mit der Außenseite der Flanschplatten 2 abschließen und somit letztere gegen die Leitungen isolieren.

Der Dichtkörper 1 und die Flanschplatten 2 weisen zwischen den Aufnahmen 3, 3' bzw. Öffnungen 5, 5' sich deckende Löcher 8 auf, durch die außen auf den Flanschplatten 2 abgestützte Spannbolzen 9 greifen. Diese Spannbolzen sind Spannschrauben, deren Spannmuttern als Hutmuttern 10 ausgebildet sein können. Die Hutmuttern 10 ermöglichen nur einen begrenzten Spannweg, so daß entsprechend auch die Verpressung des Dichtkörpers 1 begrenzt ist.

## Patentansprüche

1. Dichtung für eine Durchführung für Leitungen, wie Kabel, Rohre oder dergl., durch eine Wandöffnung, bestehend aus einem Aufnahmen (3, 3') für die Leitungen aufweisenden, einerseits gegen die Laibung der Wandöffnung, andererseits gegen die Leitungen abdichtenden gummielastischen Dichtkörper (1) und Flanschplatten (2), die auf beiden Stirnseiten des Dichtkörpers (1) angeordnet und über den dazwischen liegenden Dichtkörper (1) gegeneinander verspannbar sind, wobei der Dichtkörper (1) durch in den Aufnahmen (3, 3') mündende Trennfugen (4) geteilt ist, die Flanschplatten (2) den Dichtkörper (1) auf beiden Stirnseiten im wesentlichen über dessen gesamte Stirnfläche bedecken und den Aufnahmen (3, 3') entsprechende Öffnungen (5, 5') für die Leitungen und in den Öffnungen (5, 5') mündende und die Flanschplatten teilende Trennfugen (6.1, 6.2) aufweisen, die an beiden Flanschplatten (2) in der axialen Projektion übereinstimmend verlaufen, und wobei an jedem Flanschplattenteil mindestens eine Trennfuge (6.1) an von Trennfugen (4) freier Stelle des Dichtkörpers (1) zwischen einer der Öffnungen (5) und dem Flanschplattenrand verläuft, dadurch gekennzeichnet, daß die am Flanschplattenteil an von Trennfugen (4) freier Stelle des Dichtkörpers (1) verlaufende Trennfuge (6.1) von kongruenten koaxialen Rotationsflächen an den über die Trennfuge (6.1) einander benachbarten Flanschplattenteilen gebildet ist, und daß von dieser Öffnung (5) eine andere Trennfuge (6.2) der Flanschplatten (2) direkt oder über weitere Öffnungen (5') zum Flanschplattenrand verläuft und zu dieser Trennfuge (6.2) eine entsprechend verlaufende Trennfuge (4) im Dichtkörper (1) vorgesehen ist.

2. Dichtung nach Anspruch 1, dadurch gekennzeichnet, daß die Trennfugen (4) im Dichtkörper (1) gegen dessen Stirnflächen geneigte Trennflächen (4.1) aufweisen und an den Stirnflächen des Dichtkörpers (1) auf entgegengesetzten Seiten der zugehörigen Trennfugen (6.2) der Flanschplatten (2) münden.

3. Dichtung nach Anspruch 1 oder 2, dadurch gekennzeichnet, daß in den Trennfugen (4) des Dichtkörpers (1) die Trennflächen (4.1) längs der Trennfugen (4) verlaufende Nut- und Federausbildungen (4.2) aufweisen, die ineinander greifen und Überlappungen der Trennflächen quer zum Leitungsverlauf bilden.

4. Dichtung nach einem der Ansprüche 1 bis 3, dadurch gekennzeichnet, daß der Dichtkörper (1) an den Aufnahmen mit je einem Kragen (7) in die Öffnungen (5, 5') der Flanschplatten (2) vorsteht und die Kragen (7) bündig mit der Außenseite der Flanschplatten (2) abschließen.

5. Dichtung nach einem der Ansprüche 1 bis 4, dadurch gekennzeichnet, daß der Dichtkörper (1) und die Flanschplatten (2) zwischen den Aufnahmen (3, 3') bzw. Öffnungen (5, 5') sich deckende Löcher (8) aufweisen, durch die außen auf den Flanschplatten (2) abgestützte Spannbolzen (9) greifen.

6. Dichtung nach Anspruch 5, dadurch gekennzeichnet, daß die Spannbolzen (9) Spannschrauben mit als Hutmuttern (10) ausgebildeten Spannmuttern sind.

## Claims

1. Seal for a duct for lines, such as cables, pipes or the like, through a wall aperture, consisting of a rubber-elastic seal body (1), which has seats (3, 3') for the lines and forms a seal on the one side against the soffit of the wall aperture, and on the other side against the lines, and consisting of flange plates (2), which are mounted on both end faces of the seal body (1) and are braceable against one another via the interposed seal body (1), wherein the seal body (1) is divided by joining seams (4), which open into the seats (3, 3'), the flange plates (2) cover the seal body (1) on both end faces substantially over its entire end area, have apertures (5, 5') corresponding to the seats (3, 3') for the lines, and have joining seams (6.1, 6.2) dividing the flange plates and opening into the apertures (5, 5'), which joining seams (6.1, 6.2) extend correspondingly on both flange plates (2) in the axial projection, and wherein on each flange plate part, at least one joining seam (6.1) extends along a part of the seal body (1) free of joining seams (4) between one of the apertures (5) and the flange plate edge, characterised in that the joining seam (6.1) extending along a part of the seal body (1) free of joining seams (4) is formed of congruous, coaxial rotary faces on the flange plate parts adjacent to one another via the joining seam (6.1), and in that from this aperture (5) another joining seam (6.2) of the flange plates (2) extends directly or via further apertures (5') to the flange plate edge and a joining seam (4) extending correspondingly to this joining seam (6.2) is provided in the seal body (1).

2. Seal according to claim 1, characterised in that the joining seams (4) in the seal body (1) have joining faces (4.1) inclined relative to the end faces of said seal body (1) and open at the end faces of the seal body (1) on opposite sides of the associated joining seams (6.2) of the flange plates (2).

3. Seal according to claim 1 or 2, characterised in that in the joining seams (4) of the seal body (1), the joining faces (4.1) have tongue-and-groove formations (4.2) running along the joining seams (4), engaging in one another and forming overlaps of the joining faces transverse to the path of the lines.

4. Seal according to one of claims 1 to 3, characterised in that the seal body (1) projects at the seats with a respective collar (7) into the apertures (5, 5') of the flange plates (2), and the collars (7) occlude flush with the exterior of the flange plates (2).

5. Seal according to one of claims 1 to 4, characterised in that the seal body (1) and the flange plates (2) have holes (8) which cover one another between the seats (3, 3') or apertures (5, 5'), through which clamping bolts (9) supported on the outside of the flange plates (2) engage.

6. Seal according to claim 5, characterised in that the clamping bolts (9) are clamping screws with clamping nuts formed as cap nuts (10).

## Revendications

1. Joint pour une traversée de lignes telles que des câbles, tuyaux ou similaires, à travers une ouverture murale, comprenant un corps d'étanchéité (1) ayant l'élasticité du caoutchouc qui présente des logements (3, 3') pour les lignes et assure l'étanchéité par rapport à la surface intérieure de l'ouverture murale d'une part et par rapport aux lignes d'autre part, ainsi que des flasques-brides (2) disposés sur les deux faces frontales du corps d'étanchéité (1) et pouvant être bloqués l'un contre l'autre par l'intermédiaire du corps d'étanchéité (1) placé entre eux, le corps d'étanchéité (1) étant divisé par des fentes de séparation 141 qui débouchent dans les logements (3, 3'), les flasques-brides (2) recouvrant le corps d'étanchéité (1) sur les deux faces frontales sensiblement sur la totalité de la surface frontale, et présentant des ouvertures (5, 5') pour les lignes qui correspondent aux logements (3, 3') et des fentes de séparation (6.1, 6.2) qui débouchent dans les ouvertures ((5, 5') et divisent les flasques-brides, lesquelles fentes de séparation s'étendent sur les deux flasques-brides (2) de manière concordante dans une projection axiale, et au moins une fente de séparation (6.1) s'étendant sur chaque élément de flasque-bride, à un endroit du corps d'étanchéité (1) dépourvu de fentes de séparation (4), entre l'une des ouvertures (5) et le bord du flasque-bride, **caractérisé par le fait** que la fente de séparation (6.1) s'étendant sur l'élément de flasque-bride, à l'endroit du corps d'étanchéité (1) dépourvu de fentes de séparation (4), est constituée par des surfaces de révolution congruentes coaxiales sur les éléments de flasques-brides continus par l'intermédiaire de la fente de séparation (6.1) ; et que, à partir de cette ouverture (5), une autre fente de séparation (6.2) des flasques-brides (2) s'étend directement ou par l'intermédiaire d'ouvertures (5') en direction du bord des flasques-brides et qu'une fente de séparation (4) d'une extension analogue à celle de ladite fente de séparation (6.2) est prévue dans le corps d'étanchéité (1).

2. Joint selon la revendication 1, caractérisé par le fait que les fentes de séparation (4) dans le corps d'étanchéité (1) présentent des surfaces de séparation (4.1) inclinées vers les surfaces frontales dudit corps d'étanchéité et débouchent sur les faces frontales du corps d'étanchéité (1) sur des côtés opposés des fentes de séparation (6.2) associées des flasques brides (2).

3. Joint selon l'une des revendications 1 ou 2 caractérisé par le fait que, dans les fentes de séparation (4) du corps d'étanchéité (1), les surfaces de séparation (4.1) présentent des assemblages par rainure et languette (4.2) qui s'étendent le long des fentes de séparation (4) et s'emboîtent de manière à former des recouvrements des surfaces de séparation transversalement à l'extension des lignes.

4. Joint selon l'une des revendications 1 à 3, caractérisé par le fait que, à l'endroit des logements le corps d'étanchéité (1) dépasse avec respectivement un collet (7) dans les ouvertures (5, 5') des flasques-brides (2) et que les collets (7) affleurent la face extérieure desdits flasques-bridges (2).

5. Joint selon l'une des revendications 1 à 4, caractérisé par le fait que le corps d'étanchéité (1) et les flasques-brides (2) comportent entre les logements (3, 3') et respectivement les ouvertures (5, 5') des trous (8) qui se recouvrent et par lesquels passent les boulons de serrage (9) qui prennent extérieurement appui sur les flasques-brides (2).

6. Joint selon la revendication 5, caractérisé oar le fait que les boulons de serrage (9) sont conformés en boulons de serrage filetés avec des écrous de fixation réalisés sous la forme d'écrous borgnes (10).

Fig. 4

Fig. 3

Fig. 1

*Fig. 2*

*Fig. 5*

Fig. 6

Fig. 7

*Fig. 8*

9 a

9 b

9 c

9 d

Fig. 9